# EUROPEAN PATENT APPLICATION

(11) **EP 2 654 327 A1**
(43) Date of publication of application: **23.10.2013**
(21) Application number: 11848698.4
(22) Date of filing: 16.12.2011
(51) Int. Cl.: H04W 4/14, H04M 1/725

(54) **METHOD FOR DISPLAYING INSTANT MESSAGE ON TERMINAL AND TERMINAL**

(30) Priority: 17.12.2010 CN 201010593452
(71) Applicant: Tencent Technology (Shenzhen) Company Limited, Guangdon 518044 (CN)
(72) Inventor: YUE, Shang, Shenzhen Guangdong 518044 (CN)
(74) Representative: Mattsson, Niklas
(86) International application number: PCT/CN2011/084158
(87) International publication number: WO 2012/079540

(57) **Abstract**

The present invention discloses a method for displaying an instant message on a terminal. The method comprises: receiving a message sent from a message server; determining a location of the received message on a timeline indicating a way of displaying a list of messages in chronological order based on a message length of the received message; determining a display offset of the terminal based on the determined location of the received message on the timeline; and displaying the received message based on the display offset of the terminal. When the terminal acquires a new message sent by the message server, the message displayed on the screen is the same as the message displayed on the display screen before the terminal acquires message sent by the instant message server, thus avoiding changing the location of displayed message on the display screen when the terminal receives the new message.

## Description

### BACKGROUND OF THE INVENTION

### 1. Field of the Invention

The present invention relates to a communication technology, and more particularly, to a method of displaying instant message on a terminal and the terminal.

### 2. Description of the Prior Art

Micro-blog is a broadcast medium in the form of blogging, which allows users to exchange small elements of content such as short sentences, individual images, or video links. Micro-bloggers can use a number of services including the World Wide Web (abbreviated as WWW or W3, commonly known as the Web), WAP (Wireless Application Protocol), and all kinds of components of clients for posting about topics ranging from the simple, such as "what I'm doing right now," to the thematic, such as "sports." In this way, all the micro-blogs such as text messages, instant messages, E-mail, digital audio, or digital video can be shown on the websites, and seen by the users who can read the micro-blogs. By using computerized devices such as servers, and mobile terminals as platforms, two micro-bloggers use mobile terminals to exchange information in real-time.

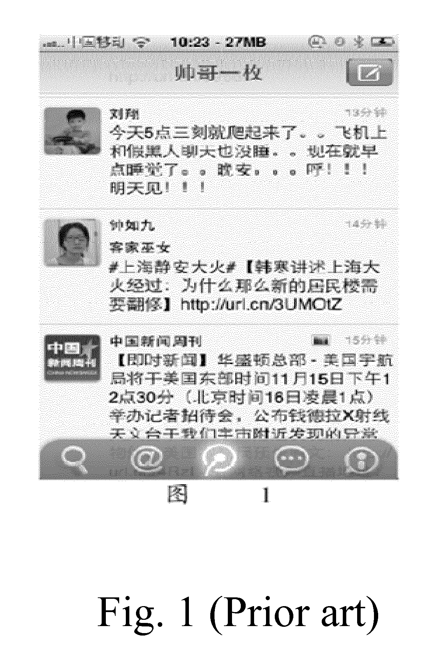

Conventionally, the mobile terminals obtain information of the micro-blog from the server, and display the information of the micro-blog as a list of events in a chronological order. In the list, every event is shown along a vertical line. The vertical line can be called "timeline." Specifically, most micro-blogs are shown on the timeline. For example, as shown in Fig. 1, messages of the micro-blog shown in a cell phone are arranged in a reverse chronological order.

A large amount of information is shown on the timeline. The mobile terminal will acquire more instant information obtained from the server when the people read the information which is arranged in the chronological order. The mobile terminal will insert the instant information into the timeline according to appearance times of the information. The insertion of the instant information will cause coordinates of all the events shown on the timeline to be changed. In particular, current reading of the people may be interrupted. It is inconvenient for the users using the mobile terminal.

### SUMMARY OF THE INVENTION

An object of the present invention is to provide a method of showing instant message using a terminal and the terminal, so as to resolve the offset of location of message which is previously shown on one location of the screen of the terminal to another location once the terminal acquires instant message.

According to the present invention, a method of displaying instant messages on a terminal comprises:
receiving a message sent from an instant message server, and setting a coordinate range of the received message on a timeline indicating a way of displaying a list of messages in chronological order based on a message length of the received message; and
determining an offset of an original displaying coordinate on the terminal, the original displaying coordinate indicating a coordinate corresponding to any one message being displayed on the timeline of the terminal, based on the coordinate range of the received message on the timeline, determining an updated displaying coordinate of the received message based on the offset, and displaying a message on a display screen of the terminal based on the updated displaying coordinate.

In one aspect of the present invention, the step of the step of setting a coordinate range of the received message on a timeline indicating a way of displaying a list of messages in chronological order based on a message length of the received message comprises:
acquiring an origin coordinate of original messages on the timeline; and
upon the condition that the message length of the received message is B and the origin coordinate of original messages is S, determining that the coordinate range of the received message on the timeline to be S-B∼S.

In another aspect of the present invention, the step of determining an offset of an original displaying coordinate on the terminal, the original displaying coordinate indicating a coordinate corresponding to any one message being displayed on the timeline of the terminal, based on the coordinate range of the received message on the timeline, determining an updated displaying coordinate of the received message based on the offset, and displaying a message on a display screen of the terminal based on the updated displaying coordinate, comprises:
determining the offset of the original displaying coordinate on the terminal to be zero upon the condition that the coordinate range of the received message on the timeline is S-B∼S, and displaying a message on a display screen of the terminal based on the updated displaying coordinate complying with the original displaying coordinate.

In another aspect of the present invention, the step of setting a coordinate range of the received message on a timeline indicating a way of displaying a list of messages in chronological order based on a message length of the received message, comprises:
upon the condition that the message length of the received message is B, setting the coordinate range of the received message on the timeline to be 0∼B based on the message length of the received message.

In another aspect of the present invention, the step of determining an offset of an original displaying coordinate on the terminal, the original displaying coordinate indicating a coordinate corresponding to any one message being displayed on the timeline of the terminal, based on the coordinate range of the received message on the timeline, determining an updated displaying coordinate of the received message based on the offset, and displaying a message on a display screen of the terminal based on the updated displaying coordinate, comprises:
determining the offset of the original displaying coordinate on the terminal to be B, upon the condition that the coordinate range of the received message on the timeline is 0∼B, and displaying a message on a display screen of the terminal based on the updated displaying coordinate complying with the original displaying coordinate plus the offset.

According to the present invention, the present invention also proposes a terminal for displaying an instant message from an instant message server. The terminal comprises a receiving module, a setting module, a determining module, and a displaying module. The receiving module is configured to receive message sent from the instant message server. The setting module is configured to set a coordinate range of the received message on a timeline indicating a way of displaying a list of messages in chronological order based on a message length of the received message. The determining module is configured to determine an offset of an original displaying coordinate, the original displaying coordinate indicating a coordinate corresponding to any one message being displayed on the timeline of the terminal, based on the coordinate range of the received message on the timeline, and to determine an updated displaying coordinate of the received message based on the offset. The displaying module is configured to display a message on a display screen of the terminal based on the updated displaying coordinate.

In another aspect of the present invention, the setting module comprises an acquiring sub-module configured to acquire an origin coordinate of original messages on the timeline, and a determining sub-module configured to determine that the coordinate range of the received message on the timeline to be S-B∼S, upon the condition that the message length of the received message is B and the origin coordinate is S.

In one aspect of the present invention, the determining module is configured to determine the offset of the displaying coordinate to be zero upon the condition that the coordinate range of the received message on the timeline is S-B∼S, and the displaying module is configured to display a message based on the updated displaying coordinate complying with the original displaying coordinate..

In another aspect of the present invention, upon the condition that the message length of the received message is B, the setting module is configured to set the coordinate range of the received message on the timeline to be 0∼B.

In another aspect of the present invention, the determining module is configured to determine the offset of the displaying coordinate to be the message length of the received message equaling to B upon the condition that the coordinate range of the received message on the timeline is 0∼B, and the displaying module is used to display a message based on the updated displaying coordinate complying with the original displaying coordinate plus the offset.

In contrast to prior art, embodiments of the present invention have several advantages as follows:
Upon the condition that the terminal acquires message sent by the instant message server, the terminal determines that the coordinate is offset based on the location of the message on the timeline in the embodiments of the present invention. Thus, the message shown on the screen remains the same after the terminal acquires new message sent by the instant message server; that is, the message shown on the screen is not altered after the terminal acquires new message. Such design is convenient for users to browse and use.

### BRIEF DESCRIPTION OF THE DRAWINGS

For better understanding embodiments of the present invention, the following detailed description taken in conjunction with the accompanying drawings is provided. Apparently, the accompanying drawings are merely for some of the embodiments of the present invention. Any ordinarily skilled person in the technical field of the present invention could still obtain other accompanying drawings without use laborious invention based on the present accompanying drawings.
Fig. 1 is a schematic diagram illustrating a timeline in a conventional technology;
Fig. 2 is a block diagram of one embodiment illustrating a message cell initially shown on a display screen of a mobile terminal;
Fig. 3 is a flow chart illustrating a method of showing an instant message on a mobile terminal according to a first embodiment of the present invention;
Fig. 4 is a flow chart illustrating a method of showing an instant message on a mobile terminal according to a second embodiment of the present invention;
Fig. 5 is a block diagram of a mobile terminal according to a third embodiment of the present invention.
Fig. 6 is a block diagram of a mobile terminal according to a fourth embodiment of the present invention.

### DETAILED DESCRIPTION OF THE PREFERRED EMBODIMENTS

For better understanding embodiments of the present invention, the following detailed description taken in conjunction with the accompanying drawings is provided. It should be understood to the ordinary skilled person in the art that the invention is not limited to the embodiments, but rather various changes or modifications thereof are possible without departing from the spirit of the invention. Accordingly, the scope of the invention shall be determined only by the appended claims and their equivalents.

The present invention proposes a method of showing instant messages on a mobile terminal. Regarding to a conventional way illustrating how the instant messages are shown on a display screen of a mobile terminal: the mobile terminal records a relationship between messages on the timeline, a way of displaying a list of messages in a chronological order, and coordinates of display locations of the instant messages on the timeline. Upon receiving a new message, i.e., a new instant message, the coordinate representing the location of the new message on the timeline is zero. The coordinates presenting locations of messages prior to the new message on the timeline is lined upwards. In the embodiment, the messages on the timeline prior to the new message are called original messages below, and a coordinate corresponding to a message being displayed on the display screen of the mobile terminal is called a displaying coordinate. The displaying coordinate is recorded by the mobile terminal. Since displaying coordinates of the original messages are changed, the context displayed on the display screen is also changed even if the displaying coordinate is unchanged. The concept of the embodiments of the present invention is that a relationship between the original displaying message and the displaying coordinate on the timeline remains even if a new message is added to the timeline.

### Embodiment One

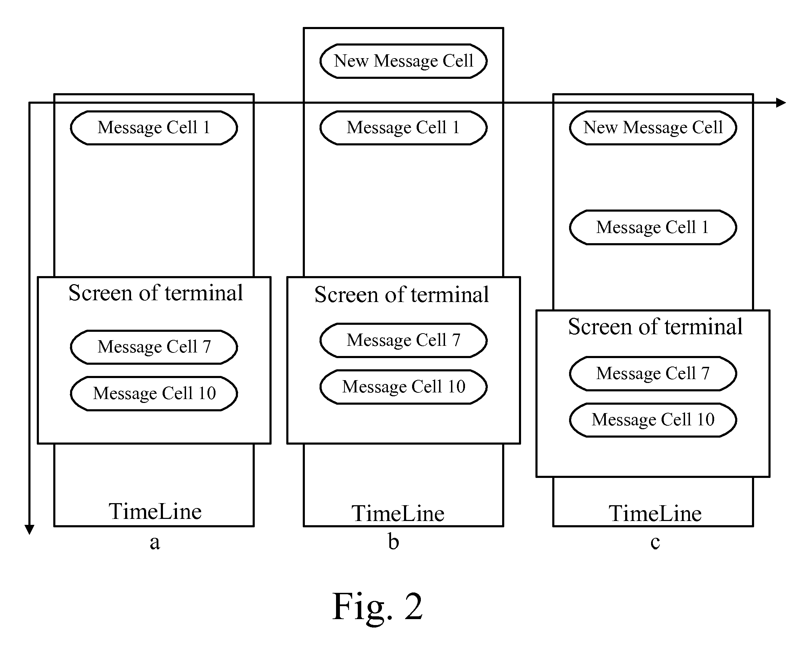

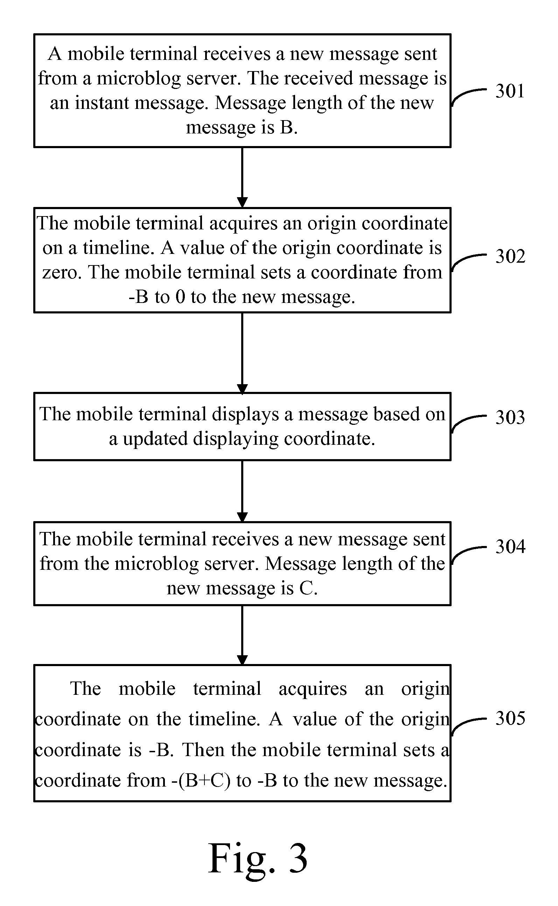

A method of showing instant message on a mobile terminal is provided according to a first embodiment of the present invention. A coordinate of a new message on the timeline is set to a negative value in this embodiment. Thus, it determines that the relationship of an original displaying message and a displaying coordinate on the timeline remains. By using a microblog server as an instant message server, message cells 7 through 10 are initially displayed on the display screen of the mobile terminal as "a" shown in Fig. 2. A user is reading the message cell 10 of which the coordinate value is set to A. Please refer to Fig. 2 and Fig. 3. The method comprises following steps of:
Step 301: A mobile terminal receives a new message sent from the microblog server. The received message is the instant message. Message length of the new message is B. Specifically, the message length B represents a range that the coordinate of the new message takes up the timeline. The message length B can also indicate to a list length or a pointer length.
Step 302: The mobile terminal acquires an origin coordinate on the timeline. In the embodiment, a value of the origin coordinate is zero. Then the mobile terminal sets a coordinate from minus B (hereinafter labeled as "-B") to 0 to the new message.

Please refer to column "b" shown in Fig. 2. After the new message is added on the timeline, the origin coordinate on the timeline is adjusted to -B, and thus the coordinates of original messages on the timeline remain. It not only determines that the new message is shown on the timeline but also realizes that all coordinates of the original messages are unchanged.

To realize the invention, coordinates on the timeline of the mobile terminal are required to be adjusted. Initially, the origin coordinate is set as 0. After the adjustment, a value of a coordinate lower than the value of the origin coordinate of 0 is set to a negative value, while a value of a coordinate larger than the value of the origin coordinate of 0 is set to a positive value.
Step 303: The mobile terminal displays a message based on an updated displaying coordinate.

Specifically, the mobile terminal shows original messages based on the updated displaying coordinate, and the original messages comply with the original displaying coordinates. The mobile terminal records the updated displaying coordinate.

In addition, the displaying coordinate recorded by the mobile terminal is updated upon the condition that the user operates the mobile terminal with a sliding touch on the display screen. The mobile terminal updates the displaying coordinate depending on the range of the user's sliding touch movement on the display screen. That is, the mobile terminal records the coordinate of a message that is being displayed on the display screen as the updated displaying coordinate, after the user stops the sliding touch on the display screen. Then, the mobile terminal shows the message corresponding to the updated displaying coordinates. Furthermore, once a later message on a temporal sequence, e.g. the new message, is displaying on the display screen, all coordinates of the messages on the timeline are offset according to a difference between the original displaying coordinate and the updated displaying coordinate. Finally, the coordinate of the new message is set to zero on the timeline. For example, as shown in column "b" of Fig. 2, upon the condition that the display screen is scrolling or sliding, the difference between the original displaying coordinate and the updated displaying coordinate is B, and the coordinate of the new message is offset from -B to zero on the timeline.

In this embodiment, the coordinate of the new message on the timeline is set to a negative value. Thus, the coordinates of original messages on the timeline are not altered, and the message corresponding to the displaying coordinate is not altered. In doing so, the mobile terminal displays the original message even if receiving the new message. Referring to column "b" shown in Fig. 2, the mobile terminal keeps showing message cell 7 through message cell 10 since the relationship of the displaying coordinate and its corresponding message are unchanged.
Step 304: The mobile terminal receives a new message sent from the microblog server. Message length of the new message is C.
Step 305: The mobile terminal acquires an origin coordinate on the timeline. In the embodiment, a value of the origin coordinate is -B. Then the mobile terminal sets a coordinate from -(B+C) to -B to the new message.

Similar to Step 302, the coordinate of the latest message on the mobile terminal is set from the offset coordinate from -(B+C) to the origin coordinate of -B. The latest message is shown on the timeline.

According to the method of the present invention, a coordinate of the latest message on the timeline is set to a negative value. Messages in a reverse chronological order on the microblog server are arranged in a top to bottom order on the timeline. The message with a negative coordinate is displayed on the display screen of the mobile terminal upon the condition that the display screen is scrolling or sliding. Thus, the message displayed on the display screen is not altered even though any instant message is added on the timeline.

### Embodiment Two

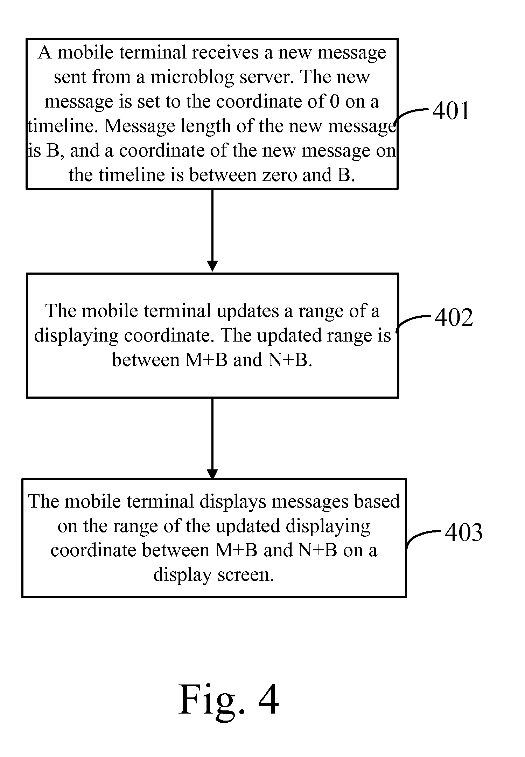

A method of displaying an instant message on a mobile terminal is provided according to a second embodiment of the present invention. Whenever coordinates of messages on the timeline are altered, a displaying coordinate is updated correspondingly. Thus, updated displaying coordinate always corresponds to original displaying messages. By using a microblog server as an instant message server, a displaying coordinate range between M and N including message cells 7 through 10 is initially displayed on the display screen of the mobile terminal as shown in a column "a" of Fig. 2. A user is reading the message cell 10 of which the coordinate is set to A. Please refer to Fig. 2 and Fig. 4. The method comprises following steps of:
Step 401: A mobile terminal receives a new message sent from a microblog server. A new message is set to the coordinate of 0 on the timeline. Message length of the new message is B, and the coordinate of the new message on the timeline is between zero and B, as shown in column "c" of Fig. 2.
Step 402: The mobile terminal updates the range of the displaying coordinate. The updated range is between M+B and N+B.

Specifically, upon the condition that a new message is added on the timeline shown on the mobile terminal, not only the displaying coordinates of original messages on the timeline are updated, but also the original displaying coordinates recorded by the mobile terminal are updated correspondingly. That is, initially, the range of the original displaying coordinates is between M and N. Afterwards, a range of the updated displaying coordinate is between M+B and N+B.
Step 403: The mobile terminal displays messages based on the range of the updated displaying coordinate between M+B and N+B on the display screen.

The coordinates of the original messages and the range of the original displaying coordinates are all offset to a value of B, upon the condition that the new message is added on the timeline. So, the updated displaying coordinates of the original displaying messages are similar to the original displaying coordinates. Please refer to column "c" of Fig. 2, the updated displaying coordinates still correspond to their original displaying messages, implying that the messages displayed on the display screen of the mobile terminal are unchanged.

It is noted that, to realize this embodiment, the mobile terminal needs to update the displaying coordinate before showing the new message on the display screen.

After the mobile terminal receives an instant message sent by the instant message server, the mobile terminal still displays the original displaying messages on the display screen. In doing so, messages shown on the display screen will not be altered while the mobile terminal receives new messages.

### Embodiment Three

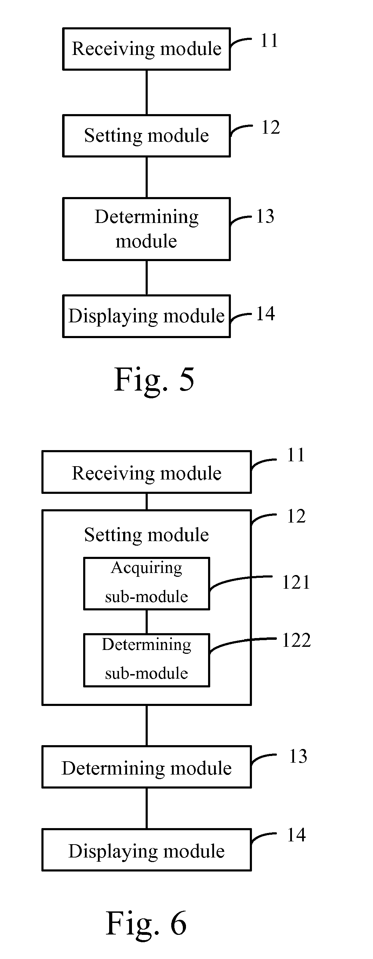

A mobile terminal is provided according to the same or similar concept of the above-mentioned embodiments. Please refer to Fig. 5. The mobile terminal comprises:
a receiving module 11, configured to receive a message sent from an instant message server;
a setting module 12, configured to set a coordinate range of the received message on a timeline indicating a way of displaying a list of messages in chronological order based on a message length of the received message;
a determining module 13, configured to determine an offset of an original displaying coordinate, the original displaying coordinate indicating a coordinate corresponding to any one message being displayed on the timeline of the terminal, based on the coordinate range of the received message on the timeline, and to determine an updated displaying coordinate of the received message based on the offset; and
a displaying module 14, configured to display the received message on a display screen of the terminal based on the updated displaying coordinate.

The setting module 12, as shown in Fig. 6, comprises:
an acquiring sub-module 121, configured to acquire an origin coordinate S of original messages on the timeline; and
a determining sub-module 122, configured to determine that the coordinate range of the received message on the timeline based on the message length B of the received message and the origin coordinate S.

Specifically, the determining module 13 is configured to determine the offset of the displaying coordinate of the original displaying message on the terminal to be zero upon the condition that the coordinate range of the received message on the timeline is starting from the origin coordinate S, i.e. between S-B and S. Correspondingly, the displaying module 14 is configured to display a message corresponding to the updated displaying coordinate on the timeline. It is noted that the updated displaying coordinate complies with the original displaying coordinate on the timeline.

Upon the condition that the message length of the received message is B, the setting module 12 is configured to set the coordinate range of the received message on the timeline based on the message length of the received message, i.e. the coordinate range between 0 and B. Correspondingly, the determining module 13 is configured to determine the offset of the displaying coordinate of the original displaying message on the terminal to be the message length of the received message upon the condition that the coordinate range of the received message on the timeline is starting from zero, i.e. the coordinate range between 0 and B. The displaying module 14 is used for displaying a message corresponding to the updated displaying coordinate, i.e. an original displaying coordinate plus the offset.

In the present invention, the message displayed on the display screen remains after the mobile terminal receives new message sent from the instant message server; that is, the message displayed on the display screen is not altered even if the mobile terminal receives new message. This scheme is more convenient for users to browse the messages.

The scheme is used for the mobile terminal, as mentioned above. But, the scheme can also be used for other terminals, such as computers, personal digital assistants (PDAs), etc.

From the above-described embodiments, it will also be appreciated by a person skilled in the art that the present invention is realized using software and a necessary and universal hardware platform. Certainly, the present invention can be realized using hardware. But, the former realization is better in practice. Based on this understanding, the concept of the present invention can be realized in a software product by programming software code in essence or for improving the conventional technology. The programmed software code can be stored in a computer readable media, such as a hard disk, CD-ROM or floppy disk of the computerized device. The software code is programmed to a plurality of instructions to drive the computerized device, such as a personal computer (PC), a server, an Internet device, etc., to execute the methods described in the embodiments.

It will also be appreciated by a person skilled in the art that accompanying figures are schematic diagrams in a preferred embodiment. The modules or flow charts in the figures are unnecessarily required in the embodiments of the present invention.

It will also be appreciated by a person skilled in the art that the modules in the device of the embodiments can be placed in the device which is described in the embodiments, or can be placed in one or a plurality of devices which are different from that is described in the embodiments. The modules in the above-mentioned embodiments can be integrated into a larger module, or can be further divided into a plurality of sub-modules.

The order in which the embodiments have been described does not indicate superiority and inferiority of one embodiment over another.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of displaying instant messages on a terminal, **characterized in that** the method comprises:
receiving a message sent from an instant message server, and setting a coordinate range of the received message on a timeline indicating a way of displaying a list of messages in chronological order based on a message length of the received message; and
determining an offset of an original displaying coordinate on the terminal, the original displaying coordinate indicating a coordinate corresponding to any one message being displayed on the timeline of the terminal, based on the coordinate range of the received message on the timeline, determining an updated displaying coordinate of the received message based on the offset, and displaying a message on a display screen of the terminal based on the updated displaying coordinate.

2. The method of claim 1, **characterized in that** the step of setting a coordinate range of the received message on a timeline indicating a way of displaying a list of messages in chronological order based on a message length of the received message, comprises:
acquiring an origin coordinate of original messages on the timeline; and
upon the condition that the message length of the received message is B and the origin coordinate of original messages is S, determining that the coordinate range of the received message on the timeline to be S-B∼S.

3. The method of claim 2, **characterized in that** the step of determining an offset of an original displaying coordinate on the terminal, the original displaying coordinate indicating a coordinate corresponding to any one message being displayed on the timeline of the terminal, based on the coordinate range of the received message on the timeline, determining an updated displaying coordinate of the received message based on the offset, and displaying a message on a display screen of the terminal based on the updated displaying coordinate, comprises:
determining the offset of the original displaying coordinate on the terminal to be zero upon the condition that the coordinate range of the received message on the timeline is S-B∼S, and displaying a message on a display screen of the terminal based on the updated displaying coordinate complying with the original displaying coordinate.

4. The method of claim 1, **characterized in that** the step of setting a coordinate range of the received message on a timeline indicating a way of displaying a list of messages in chronological order based on a message length of the received message, comprises:
upon the condition that the message length of the received message is B, setting the coordinate range of the received message on the timeline to be 0∼B based on the message length of the received message.

5. The method of claim 4, **characterized in that** the step of determining an offset of an original displaying coordinate on the terminal, the original displaying coordinate indicating a coordinate corresponding to any one message being displayed on the timeline of the terminal, based on the coordinate range of the received message on the timeline, determining an updated displaying coordinate of the received message based on the offset, and displaying a message on a display screen of the terminal based on the updated displaying coordinate, comprises:
determining the offset of the original displaying coordinate on the terminal to be B, upon the condition that the coordinate range of the received message on the timeline is 0∼B, and displaying a message on a display screen of the terminal based on the updated displaying coordinate complying with the original displaying coordinate plus the offset.

6. A terminal for displaying instant messages from an instant message server, **characterized in that** the terminal comprises:
a receiving module, configured to receive a message sent from the instant message server;
a setting module, configured to set a coordinate range of the received message on a timeline indicating a way of displaying a list of messages in chronological order based on a message length of the received message;
a determining module, configured to determine an offset of an original displaying coordinate, the original displaying coordinate indicating a coordinate corresponding to any one message being displayed on the timeline of the terminal, based on the coordinate range of the received message on the timeline, and to determine an updated displaying coordinate of the received message based on the offset; and
a displaying module configured to display a message on a display screen of the terminal based on the updated displaying coordinate.

7. The terminal of claim 6, **characterized in that** the setting module comprises:
an acquiring sub-module, configured to acquire an origin coordinate of original messages on the timeline; and
a determining sub-module, configured to determine that the coordinate range of the received message on the timeline to be S-B∼S, upon the condition that the message length of the received message is B and the origin coordinate is S.

8. The terminal of claim 7, **characterized in that** the determining module is configured to determine the offset of the displaying coordinate to be zero upon the condition that the coordinate range of the received message on the timeline is S-B∼S, and the displaying module is configured to display a message based on the updated displaying coordinate complying with the original displaying coordinate.

9. The terminal of claim 6, **characterized in that** upon the condition that the message length of the received message is B, the setting module is configured to set the coordinate range of the received message on the timeline to be 0∼B.

10. The terminal of claim 9, **characterized in that** the determining module is configured to determine the offset of the displaying coordinate to be the message length of the received message equaling to B upon the condition that the coordinate range of the received message on the timeline is 0∼B, and the displaying module is used to display a message based on the updated displaying coordinate complying with the original displaying coordinate plus the offset.
